# EUROPÄISCHE PATENTSCHRIFT

(11) **EP 3 123 024 B1**
(45) Veröffentlichungstag und Bekanntmachung des Hinweises auf die Patenterteilung: **25.04.2018**
(21) Anmeldenummer: 16718378.9
(22) Anmeldetag: 26.04.2016
(51) Int. Cl.: F03B 3/04, F03B 3/12, F03B 13/26, F03B 17/06

(54) **WASSERKRAFTWERK MIT FREISTEHENDER DREHACHSE**
HYDROELECTRIC TURBINE HAVING ROTOR WITH OPEN CENTRE
TURBINE HYDROÉLECTRIQUE AVEC ROTOR DÉFINISSANT UNE CAVITÉ CENTRALE

(30) Priorität: 27.04.2015 WO PCT/EP2015/000864; 28.05.2015 DE 202015003882 U
(43) Veröffentlichungstag der Anmeldung: 01.02.2017
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver
(86) Internationale Anmeldenummer: PCT/EP2016/059263
(87) Internationale Veröffentlichungsnummer: WO 2016/174017

(56) Entgegenhaltungen:
- EP-A1- 2 241 749
- EP-A1- 2 568 161
- WO-A2-2008/081187
- WO-A2-2009/153124
- US-A1- 2007 018 459

## Beschreibung

Die Erfindung betrifft ein Wasserkraftwerk für die Erzeugung von elektrischem Strom aus einem fließenden Medium wie insbesondere Waser nach dem Oberbegriff des Anspruchs 1 sowie eine Wasserkraftanlage mit einem solchen Wasserkraftwerk. Das Wasserkraftwerk weist hierbei eine Turbine mit einem an einer Außenseite umströmbaren Gehäuse auf. In dem Gehäuse ist ein Stator eines elektrischen Generators vorgesehen, der sowohl separat zum Gehäuse als auch einteilig mit diesem ausgebildet sein kann. Ferner weist die Turbine einen relativ zum Stator drehbar gelagerten Rotor auf, der zusammen mit dem Stator einen Generator bildet, der als Langsamläufer arbeitet. Der Rotor weist dabei einen Rotorring mit einer Ringfläche und eine Anordnung von sich ausgehend vom Rotorring nach innen erstreckenden blatt- oder schaufelförmigen Turbinenschaufeln auf, die sich ausgehend vom Rotorring nach innen erstrecken. Der Rotor definiert dabei eine Drehachse, die frei steht. Dabei bildet das Gehäuse einen Eintrittsabschnitt mit einer eine kreisförmige Eintrittsöffnung begrenzenden ersten stirnseitigen Schneide aus. Von dieser ersten stirnseitigen Schneide erstreckt sich eine eintrittsseitige Leitfläche zum Rotor hin. Ferner bildet das Gehäuse einen Austrittsabschnitt mit einer Austrittsöffnung aus, wobei zwischen der Eintrittsöffnung und der Austrittsöffnung ein den Rotorring passierender Fließpfad ausgebildet werden kann.

Aus CA 2352673 A1 ist ein Kraftwerk mit einem elektrischen Generator bekannt, der einen ringförmigen Stator und einen relativ zu diesem drehbar gelagerten Rotor aufweist. Der Rotor weist mehrere von einem umfangsgelagerten Rotorring nach innen stehende Rotorblätter auf, wobei der Rotor eine frei stehende Drehachse definiert. Der Generator ist zudem mit einem Rohr verbunden, das auf die Rotorblätter gerichtet ist. Auf diese Weise kann der Rotor mittels eines durch das Rohr geleiteten Wasserstroms in eine Drehbewegung gegenüber dem Stator versetzt werden, um hierbei elektrischen Strom generieren zu können.

Durch die umfangsseitige Lagerung des Rotors kann das bekannte Kraftwerk besonders einfach in ein Rohrleitungssystem mit einem darin strömenden Fluid integriert werden, um dessen Strömungsenergie in elektrische Energie beziehungsweise elektrischen Strom umzuwandeln.

Nachteilig an diesem bekannten elektrischen Generator ist dabei, dass dieser nur in Verbindung mit einem passenden Rohrleitungssystem verwendet werden kann.

Aus WO 2008/081187 A2 ist ein Gezeitenkraftwerk bekannt, das am Boden eines Gezeitengewässers oder an einer auf dem Gewässer schwimmenden Plattform gehalten ist. Das Kraftwerk weist dabei mehrere Turbinen auf, deren Gehäuse jeweils derart ausgebildet ist, dass es sich selbsttätig entgegen der jeweiligen Fließrichtung des Gezeitengewässers ausrichten kann. Hierzu bilden die Gehäuse in allen vorgesehenen Ausführungsformen einen Strömungspfad aus, der sich von einer Eintrittsöffnung ausgehend wenigstens abschnittsweise verjüngt, um einen für die Ausrichtung ausreichend großen Staudruck zu erzeugen.

Nachteilig an dem bekannten Wasserkraftwerk ist, dass an diesem im Betrieb relativ starke Verwirbelungen auftreten und an den Turbinen insgesamt ein relativ hoher Strömungsdruck angreift. Hierdurch benötigt das Wasserkraftwerk eine sehr aufwändige und dauerhaft stabile Verankerung der Turbinen.

EP 2 568 161 A1 beschreibt eine Vorrichtung zur Gewinnung von elektrischer Energie aus Wasserkraft, wie insbesondere aus Gezeitenströmungen. Dieses weist ein röhrenförmiges Gehäuseteil auf, in dem eine Vielzahl von Rotorblättern verdrehbar sind. Um eine Strömungsgeschwindigkeit des durchströmenden Wassers innerhalb der Vorrichtung zu erhöhen, ist an dem Gehäuse ein Einlauftrichter vorgesehen.

EP 2 241 749 A1 beschreibt ein Gezeitenkraftwerk mit einem rohrförmigen Gehäuse, in dem ein Rotor mit mehreren von einem Rotorring nach innen ragenden Rotorblättern angeordnet ist. Am Einlauf des Gehäuses ist dabei ein Profil vorgesehen, das den Strömungspfad in Strömungsrichtung verjüngt.

US 2007/0018459 A1 zeigt ein Wasserkraftwerk mit einem Rotor, der in einem Gehäuse angeordnet ist, das an beiden Stirnseiten jeweils durch einen Flansch gebildet ist. Diese bilden jeweils eine kreisrunde Öffnung, über die die Vorrichtung durchströmt wird. Dabei treibt die Strömung mehrere Rotorblätter an, die sich von einem Rotorring nach innen erstrecken, wobei eine freistehende Drehachse definiert wird.

Die Aufgabe der Erfindung ist es, ein Wasserkraftwerk zur Verfügung zu stellen, das einen vielseitigen, einfachen und vorzugsweise mobilen Einsatz ermöglicht. Diese Aufgabe wird durch ein Wasserkraftwerk mit den Merkmalen des Anspruchs 1 gelöst. Dabei weist die Eintrittsöffnung einen freien Eintrittsquerschnitt auf, der maximal so groß ist, wie eine durch den Rotorring begrenzte Querschnittsfläche. Hierdurch ist gewährleistet, dass der im Betrieb an der Eintrittsöffnung auftretende Durchfluss des einströmenden Mediums zumindest nicht wesentlich größer ist als der Durchfluss im Bereich des Rotors. Folglich kann sowohl der auf die Turbine einwirkende Strömungsdruck als auch das Auftreten von Verwirbelungen im Fließpfad minimiert werden. Dies ermöglicht wiederum neben einem hohen Wirkungsgrad der Turbine eine einfache Handhabung und Befestigung des Wasserkraftwerkes in einem strömenden Medium. Hierdurch ist es möglich, das Wasserkraftwerk in ein fließendes Gewässer, wie beispielsweise in ein natürliches Fließgewässer oder einen Kanal über dessen Oberfläche einzutauchen und mit wenig Aufwand zu befestigen, um es als Strömungskraftwerk zu verwenden. Dabei werden die Turbinenschaufeln mit einem Fließdruck beaufschlagt, über den ein Drehmoment am Rotor erzeugt wird, das diesen in eine Drehbewegung gegenüber dem Stator versetzt. Durch die relative Drehbewegung des Rotors gegenüber dem Stator, die zusammen als Generator wirken, kann hierbei die Bewegungsenergie des fließenden Gewässers in elektrische Energie beziehungsweise in elektrischen Strom umgewandelt werden. Der Generator arbeitet dabei als Langsamläufer, da die Bewegungsgeschwindigkeit des Rotors im Wesentlichen mit der Fließgeschwindigkeit des durch die Turbine strömenden Gewässers übereinstimmt. Aus dem geringen Strömungsdruck, der gleichmäßigen Strömung durch den Fließpfad und der relativ niedrigen Drehgeschwindigkeit des Rotors in Verbindung mit dessen freier Drehachse resultiert dabei eine besonders hohe Umweltverträglichkeit des Wasserkraftwerkes. Dabei ist es beispielsweise Fischen möglich, die Turbine unbeschadet zu passieren. Auf diese Weise kann das Wasserkraftwerk ohne wesentlichen störenden Einfluss auch in natürlichen Fließgewässern betrieben werden. Durch den einfachen Aufbau und die einfache Positionierung der Turbine durch bloßes Eintauchen in das betreffende Fließgewässer kann das Wasserkraftwerk dabei zudem sehr vielseitig und insbesondere unabhängig von Rohrleitungen oder Wehrbauwerken eingesetzt werden. Auf diese Weise wird insbesondere auch ein mobiler Einsatz im Freizeitbereich oder für Rettungskräfte ermöglicht. Um das Wasserkraftwerk hierzu mit einem möglichst geringen Gewicht ausführen zu können, kann das Wasserkraftwerk, bis auf die für die Stromerzeugung benötigten Elemente, im Wesentlichen durch Bauteile aus Kunststoff und/oder Aluminium gebildet sein.

In einer besonders vorteilhaften Ausführungsform ist der freie Eintrittsquerschnitt der Eintrittsöffnung maximal so groß, wie die durch den Rotorring begrenzte Querschnittsfläche abzüglich einer Materialquerschnittsfläche der Turbinenschaufeln. Auf diese Weise entspricht die Größe der freien Querschnittsfläche der Eintrittsöffnung im Wesentlichen der Größe der resultierenden freien Querschnittsfläche des durchströmten Rotors, wodurch eine besonders gleichmäßige und verwirbelungsfreie Strömung entlang des Fließpfades durch die Turbine hindurch erzielt werden kann.

Zudem ist es günstig, wenn der Austrittsabschnitt eine zweite stirnseitige Schneide aufweist, die eine kreisförmige Austrittsöffnung begrenzt, von der sich eine austrittsseitige Leitfläche zum Rotor erstreckt, und der freie Eintrittsquerschnitt der Eintrittsöffnung maximal so groß ist wie ein freier Austrittsquerschnitt der Austrittsöffnung. Durch die beiderseitige Ausbildung einer stirnseitigen Schneide kann der in den Fließpfad der Turbine eintretende Strömungskörper des Mediums besonders verwirbelungsfrei an der Eintrittsöffnung vom übrigen Medium abgetrennt und an der Austrittsöffnung dem übrigen Medium wieder zugeführt werden. Zudem gewährleistet die hierbei vorgesehene maximale Größe des freien Eintrittsquerschnittes gegenüber dem Austrittsquerschnitt, dass der Durchfluss beim Eintreten des Mediums in die Eintrittsöffnung nicht größer ist als der Abfluss des Mediums an der Austrittsöffnung. Dadurch kann über die gesamte Länge des Fließpfades durch die Turbine hindurch eine besonders gleichmäßige und verwirbelungsfreie Strömung eingerichtet werden, so dass der an der Turbine auftretende Staudruck auf ein Minimum reduziert werden kann. Erfindungsgemäß weist die Außenseite des Gehäuses zwischen der Eintrittsöffnung und der Austrittsöffnung eine konvexe Kontur auf. Auf diese Weise kann die Außenseite über ihren gesamten Umfang mit relativ geringem Strömungswiderstand umströmt werden. Gleichzeitig bildet der Querschnitt des Gehäuses auf diese Weise an seiner Innenseite ausreichend Raum, um Teile des Generators, wie beispielsweise den Stator oder magnetfederzeugende Mittel des Rotors derart aufzunehmen, dass diese gegenüber dem umströmenden Wasser oder gegenüber dem von diesem erzeugten Fließdruck abgeschirmt sind. Vorteilhafterweise ist das Gehäuse dabei an der Außenseite eben gewölbt, d.h. stetig ausgeformt. Auf diese Weise kann der im Betrieb am Gehäuse auftretende Strömungswiderstand minimiert werden, wobei insbesondere die Ausbildung von Wirbeln durch die umlaufende ebene Wölbung vermieden werden kann. Auf diese Weise kann für das Gehäuse ein cW-Wert erzielt werden, der nicht mehr als 0,4, insbesondere maximal 0,3 beträgt, so dass der Strömungswiderstand des Gehäuses gegenüber dem jeweiligen umströmenden Wasser besonders niedrig ist.

Zudem ist es günstig, wenn die wenigstens eine stirnseitige Schneide einen möglichst kleinen Radius ausbildet, der gerade noch große genug ist, um in Abhängigkeit des jeweils gewählten Materials Schnittverletzungen bei der Montage oder der Handhabung des Gehäuses ausschließen zu können, wobei die Schneide insbesondere einen maximalen Radius von 5 mm aufweist. Hierbei ist es günstig, wenn das Gehäuse beispielsweise aus Kunststoff hergestellt ist, wodurch die Schneide mit einem besonders kleinen Radius hergestellt werden kann. Zudem kann das Gehäuse durch die Verwendung von Kunststoff mit einem besonders geringen Eigengewicht hergestellt werden, was die Mobilität des Wasserkraftwerkes insgesamt erhöht. Durch den möglichst geringen Radius der stirnseitigen Schneide kann der im Betrieb an der zulaufseitigen Stirnseite des Gehäuses auftretende Staudruck minimiert werden. Durch die zusätzliche Ausbildung der Schneide an der ablaufseitigen Stirnseite kann zudem ein strömungsgünstiges Abreißen der Strömung vom Gehäuse am Ende des Umströmens der Außenseite erzielt werden.

Ferner ist es günstig, wenn die Turbinenschaufeln einen Anstellwinkel aufweisen, der auf einen Wert beschränkt ist, bei dem hinsichtlich der für den Betrieb des Wasserkraftwerkes vorgesehenen Fließgeschwindigkeiten des Mediums, wie insbesondere in üblichen Fließgewässern, keine wesentlichen Turbulenzen auftreten. Hierdurch kann das Wasserkraftwerk in besonders naturschonender Weise eingesetzt werden.

Vorteilhafterweise ist zwischen dem Rotorring und dem Eintrittsabschnitt sowie zwischen dem Rotorring und dem Austrittsabschnitt jeweils ein Ringspalt ausgebildet, wobei ein Spulenraum der Turbine über diese beiden Ringspalte nach außen hin vollständig oder wenigstens weitestgehend abgedichtet ist. Hierdurch kann eine Beeinträchtigung der Stromerzeugung oder eine Beschädigung von magnetfelderzeugenden Mitteln der Turbine durch eindringendes Wasser und Korrosion vermieden werden. Dabei ist es günstig, wenn an dem Ringspalt beispielsweise eine Lippendichtung vorgesehen ist. Hierzu kann wenigstens ein geschlossener Dichtungsring in einer am Rotor und/oder am Stator beziehungsweise Gehäuse eingelassenen Ringnut gehalten sein. Hierdurch kann eine besonders zuverlässige Abdichtung des Spulenraumes nach außen erreicht werden. Alternativ oder zusätzlich hierzu kann an dem Ringspalt eine Labyrinthdichtung vorgesehen werden. Die Labyrinthdichtung ermöglicht dabei eine besonders langlebige Abdichtung des Ringspaltes. Hierbei kann die relative Drehbewegung des Rotors zusätzlich dazu genutzt werden, um an den ineinander greifenden Teilen der Labyrinthdichtung einen Strömungswiderstand aufzubauen. Auf diese Weise kann eine zumindest angenähert vollständige Abdichtung des Ringspaltes erzielt werden, durch die die Menge des in den Spulenraum eindringenden Wassers auf ein unbeachtliches Maß reduziert werden kann.

In einer hierzu alternativen Ausführungsform können zwischen dem Rotorring und dem Eintrittsabschnitt sowie zwischen dem Rotorring und dem Austrittsabschnitt jeweils schmiermittelfreie Lagermittel und ein dichtungsfreier Ringspalt ausgebildet sein. Die schmiermittelfreien Lagermittel können dabei beispielsweise aus Kunststoff und/oder Keramik hergestellt sein. Auf diese Weise kann die Turbine auch ohne Abdichtungsmittel zwischen dem Rotor und dem Stator betrieben werden, wodurch das Wasserkraftwerk über längere Betriebszeiten hinweg ohne Wartung betrieben werden kann. Zudem ermöglichen die zumindest überwiegend aus Kunststoff hergestellten Lagermittel eine besonders leichte Bauweise der Turbine.

Alternativ oder zusätzlich hierzu kann der Spulenraum in einer weiteren vorteilhaften Ausführungsform des Wasserkraftwerkes mit einem Überdruck beaufschlagt werden, um den Eintritt von Wasser in den Spulenraum vollständig verhindern zu können. Hierzu kann der Spulenraum beispielsweise über eine Druckleitung an eine Druckluftquelle angeschlossen werden. Auf diese Weise kann der Überdruck im Spulenraum besonders einfach und kostengünstig bereitgestellt werden.

Vorteilhafterweise ist an dem Ringspalt zudem eine Antihaftbeschichtung vorgesehen. Die Antihaftbeschichtung kann dabei beispielsweise an benachbarten Oberflächen des Rotors einerseits und des Stators oder des Gehäuses andererseits, zwischen einem dieser Teile und der Lippendichtung, zwischen zwei Dichtungsringen der Lippendichtung oder zwischen relativ zueinander bewegten Teilen der Labyrinthdichtung vorgesehen sein. In jedem Fall kann durch die Antihaftbeschichtung dabei ein geringerer Reibungswiderstand und somit ein höherer Wirkungsgrad sowie ein geringerer Verschleiß erzielt werden.

Vorteilhafterweise weist die Turbine zudem magnetfelderzeugende Mittel auf, die wenigstens teilweise mit Epoxidharz versiegelt sind. Hierdurch können die betreffenden magnetfelderzeugende Mittel, wie Spulen oder Dauermagnete, besonders wirksam und dauerhaft gegen Beschädigungen durch eintretendes Wasser, wie beispielsweise in Folge von Korrosion, geschützt werden.

In einer vorteilhaften Ausführungsform ist der Rotor gegenüber dem Stator in beiden Drehrichtungen verdrehbar und wenigstens die Außenseite des Gehäuses achsensymmetrisch ausgebildet, wodurch die Turbine in zwei Richtungen betrieben werden kann. Auf diese Weise kann eine fehlerhafte Positionierung des Wasserkraftwerkes beim Eintauchen der Turbine in das betreffende Fließgewässer verhindert werden.

Ferner ist es günstig, wenn die Turbine einen inneren Strömungsdurchmesser von wenigstens 30 cm begrenzt. Hierdurch kann mittels der Turbine auch mit einer freien Durchtrittsöffnung, die den Durchtritt relativ großer Fische erlaubt, in üblichen natürlichen Fließgewässern eine ausreichende Stromerzeugung und damit ein wirtschaftlicher Betrieb gewährleistet werden.

Bevorzugterweise ist an der Drehachse eine freie Durchtrittsöffnung vorgesehen, die einen Durchmesser von wenigstens 10 cm aufweist. Hierdurch können Fische mit einer für natürliche Fließgewässer üblichen maximalen Große die Durchtrittsöffnung der Turbine problemlos passieren. Folglich können auf diese Weise die durch die Anwendung der Wasserturbine in natürlichen Gewässern hervorgerufenen Einflüsse auf die Umwelt auf ein Minimum reduziert werden.

Ferner ist es günstig, wenn das Gehäuse an einer Lagervorrichtung mit einem starren, insbesondere rohrförmigen Lagerelement gehalten ist, das einen freien Aufnahmequerschnitt bildet. Über das starre Lagerelement kann die Turbine dabei über die Oberfläche des jeweiligen Gewässers eingetaucht und festgelegt werden, wobei gleichzeitig alle für den Betrieb der Turbine benötigten Leitungen komfortabel und geschützt innerhalb der Lagervorrichtung verlegt werden können.

Vorteilhafterweise ist dabei eine mit dem Stator verbundene elektrische Leitung in dem freien Aufnahmequerschnitt aufgenommen. Hierdurch kann der vom Generator erzeugte elektrische Strom von der eingetauchten Turbine über die in der Lagervorrichtung geschützt verlegten elektrischen Leitung komfortabel und sicher an Land geleitet werden.

Dabei ist es zudem günstig, wenn in dem freien Aufnahmequerschnitt die mit dem Spulenraum verbundene Druckleitung aufgenommen ist. Auf diese Weise kann auch die zum Aufbau des Überdruckes im Spulenraum benötigte Druckluftleitung von einer an Land positionierten Druckluftquelle geschützt und komfortabel zur Turbine verlegt werden.

In einer weiteren vorteilhaften Ausführungsform weist das Gehäuse zusätzlich zur Lagervorrichtung einen Lagersporn auf, der zur Verankerung der Turbine in beziehungsweise an einem Gewässerboden dient. Der wenigstens eine Lagersporn steht dabei beispielsweise an einer vom Lagerelement abgewandten Seite des Gehäuses ab, so dass die Turbine beim Eintauchen in das betreffende Gewässer zusätzlich am Gewässergrund abgestützt werden kann, was eine stabilere Positionierung des Wasserkraftwerkes ermöglicht.

Ferner wird die oben genannte Aufgabe durch eine Wasserkraftanlage mit wenigstens einem Wasserkraftwerk in einer der oben genannten Ausführungsformen gelöst, bei dem das Gehäuse in ein fließendes Gewässer, wie beispielsweise ein natürliches Gewässer oder ein künstlicher Kanal, eingetaucht ist und über die Lagervorrichtung mit einer außerhalb des Gewässers angeordneten Fixierung verbunden ist, die neben dem jeweiligen Fließgewässer eine positionsstabile Befestigung der Wasserkraftanlage ermöglicht. Vorausgesetzt, dass eine ausreichende Wassertiefe gegeben ist, kann eine solche Wasserkraftanlage an nahezu beliebigen Stellen als Kleinstströmungskraftwerk zur Erzeugung elektrischer Energie eingesetzt werden. Zudem kann eine solche Wasserkraftanlage durch den einfachen und kompakten Aufbau und die besonders komfortable Positionierung und Inbetriebnahme der Turbine durch bloßes Eintauchen in ein Fließgewässer, auch als mobile oder temporäre Wasserkraftanlage für eine netzunabhängige Bereitstellung von elektrischem Strom verwendet werden. Die Fixierung kann dabei beispielsweise durch eine Bodenverankerung, ein auf einem Untergrund abstellbares Auflager von ausreichendem Gewicht oder durch Befestigungsmittel zum Festspannen an einem vorhandenen Bauteil/Bauwerk oder einem Baum gebildet sein. Auf diese Weise ist eine sehr schnelle Errichtung der Wasserkraftanlage möglich, was wiederum einen besonders kostengünstigen, flexiblen und beispielsweise mobilen Einsatz ermöglicht.

Zudem ist es günstig, wenn die Fixierung auf einem horizontalen Niveau angeordnet ist, das oberhalb der Turbine angeordnet ist. Die Fixierung der Lagervorrichtung kann hierdurch oberhalb des Wasserspiegels des betreffenden Fließgewässers angeordnet werden, wie beispielsweise auf einem gegenüber Überschwemmungen sicheren Niveau im Uferbereich oder auf beziehungsweise an einer künstlichen Uferbefestigung, wie beispielsweise einem Deich oder einer Uferwand. Hierdurch können die Fixierung selbst und insbesondere elektrische Einrichtungen der Wasserkraftanlage, die zur Weiterleitung des gewonnenen elektrischen Stromes dienen, wirksam gegen den Kontakt mit Wasser, wie beispielsweise in Folge von Hochwässern, geschützt werden.

Ferner ist es vorteilhaft, wenn zwischen der Fixierung und der Lagervorrichtung ein Dreh- und/oder Schwenkgelenk vorgesehen ist. Hierdurch kann bei verbleibender Fixierung die an der Lagervorrichtung gehaltene Turbine an Land geschwenkt und/oder gekippt werden, um besser zugänglich zu sein. Auf diese Weise können beispielsweise Wartungs-, Reparatur- oder Reinigungsarbeiten besonders komfortabel durchgeführt werden.

In einer alternativen Ausführungsform ist die Wasserkraftanlage an einem Wasserfahrzeug, wie beispielsweise einem Sportboot gelagert. Um dabei eine lediglich bedarfsweise Positionierung des Wasserkraftwerks in dem jeweiligen Gewässer beziehungsweise ein einfaches Verstauen an Bord des Wasserfahrzeuges zu ermöglichen, kann auch bei dieser Wasserkraftanlage das Gehäuse über ein Dreh- und/oder Schwenklager zwischen der Lagervorrichtung und der Fixierung am Wasserfahrzeug gelagert sein. Hierdurch kann das Wasserkraftwerk aus dem Wasser heraus an Bord des Wasserfahrzeuges verlagert werden und umgekehrt. Der von der Wasserkraftanlage erzeugte elektrische Strom kann dabei beispielsweise zur Aufladung von wenigstens einem elektrochemischen Energiespeicher verwendet werden, wie insbesondere im angelegten Zustand des Wasserfahrzeugs in einem fließenden Gewässer oder auch während der Fahrt. Als elektrochemische Energiespeicher können dabei beispielsweise aufladbare Speichersysteme vorgesehen sein, wie insbesondere Batterie-/Akkumulatoren-Systeme oder Superkondensatoren.

In einer besonders vorteilhaften Ausführungsform ist dabei eine durchströmbare Schutzanordnung vorgesehen, die dem Rotor bezüglich einer vorgesehenen Strömungsrichtung vorgeschaltet ist. Die durchströmbare Schutzanordnung kann dabei unabhängig vom Wasserkraftwerk in der jeweils vorgesehenen Position im Gewässer gehalten sein, das heißt durch eigene Befestigungsmittel, wie beispielsweise durch ein eigenes Fundament. Alternativ hierzu kann die Schutzanordnung auch an dem Gehäuse gehalten sein, um beispielsweise einen einfachen und schnellen Einsatz der Wasserkraftanlage zu ermöglichen. In jedem Fall kann die Schutzanordnung dabei beispielsweise eine Gitterstruktur oder eine Anordnung von parallelen Stäben aufweisen. Durch diese kann die Turbine und insbesondere der Rotor vor Beschädigungen durch Treib- oder Schwebegut geschützt werden.

Hierbei ist es besonders günstig, wenn die durchströmbare Schutzanordnung eine Anordnung von parallelen Stäben aufweist, die im Wesentlichen horizontal und schräg gegenüber dem Rotor angeordnet sind. Durch die Ausrichtung schräg zum Rotor beziehungsweise zur Strömungsrichtung des betreffenden Gewässers, kann angeschwemmtes Treib- oder Schwebegut um die Turbine herum abgelenkt werden, ohne dass es an der Schutzanordnung verbleibt. Auf diese Weise kann die Turbine und insbesondere der Rotor über einen längeren Zeitraum sowohl vor Beschädigungen als auch gegenüber Verunreinigungen durch Treib- oder Schwebegut geschützt werden.

In den Figuren ist eine beispielhafte Ausführungsform der Erfindung dargestellt. Es zeigen:
- Figur 1: eine perspektivische Ansicht eines erfindungsgemäßen Wasserkraftwerkes,
- Figur 2: eine Ansicht einer Turbine des Wasserkraftwerkes in Richtung II aus Fig. 1,
- Figur 3: eine geschnittene Ansicht der Turbine in Ebene III-III aus Fig. 2,
- Figur 4: ein vergrößertes Detail IV aus Fig. 3,
- Figur 4a: eine weiter vergrößerte Abdichtung gemäß Detail IVa aus Fig. 4,
- Figur 4b: eine alternative Ausführungsform der Abdichtung,
- Figur 5: eine Ansicht eines Rotors der Turbine,
- Figur 6: eine Seitenansicht des Rotors in Richtung VI aus Fig. 5,
- Figur 7: eine perspektivische Ansicht eines Stators der Turbine,
- Figur 8: eine perspektivische Ansicht einer Wasserkraftanlage mit dem Wasserkraftwerk gemäß Fig. 1,
- Figur 9: eine perspektivische Ansicht einer alternativen Ausführungsform der Wasserkraftanlage mit dem Wasserkraftwerk gemäß Fig. 1 und
- Figur 10: eine perspektivische Ansicht einer weiteren alternativen Ausführungsform der Wasserkraftanlage mit zwei Wasserkraftwerken gemäß Fig. 1 und einer Schutzanordnung.
- Figur 11: eine perspektivische Ansicht einer weiteren alternativen Ausführungsform der Wasserkraftanlage, die an einem Wasserfahrzeug angebracht ist.

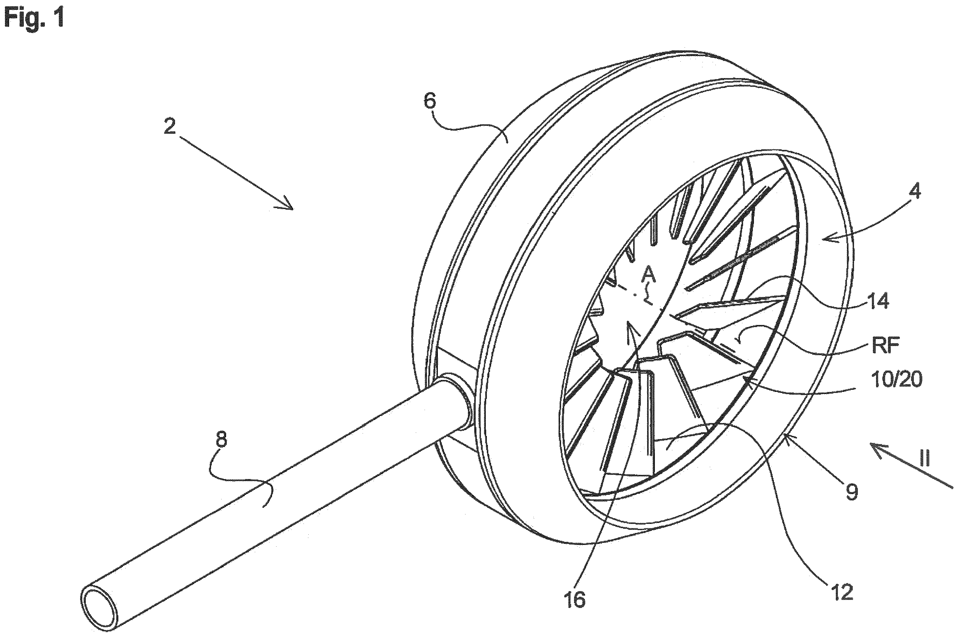

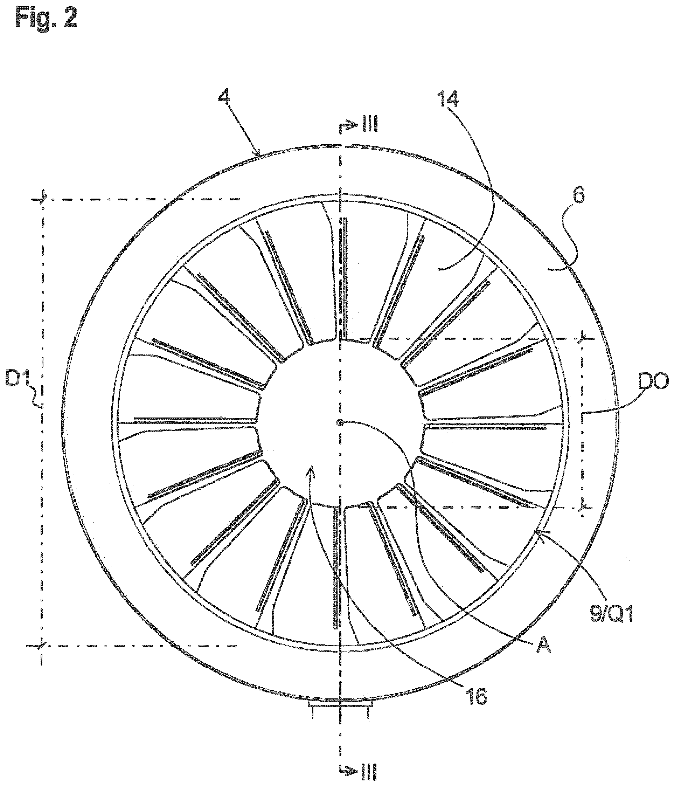

Die Fig. 1 und 2 zeigen ein Wasserkraftwerk 2 in Form eines Kleinstströmungskraftwerkes, das eine Turbine 4 mit einem Gehäuse 6 aufweist, das an einer rohrförmigen Lagerungsvorrichtung 8 gehalten ist. Hierbei weist die Turbine 4 eine durch das Gehäuse 6 begrenzte Eintrittsöffnung 9 auf, die einen kreisförmigen freien Eintrittsquerschnitt Q1 begrenzt, der einen Durchmesser D1 von wenigstens 30 cm aufweist, wie aus Fig. 2 zu entnehmen ist.

Innerhalb des Gehäuses 6 ist ein Rotor 10 eines Generators 20 vorgesehen. Der Rotor 10 weist dabei einen Rotorring 12 mit einer zylinderförmigen Ringfläche RF auf, von der eine Anordnung von mehreren Turbinenschaufeln 14 radial nach innen ragt. Die Turbinenschaufeln 14 erstrecken sich dabei nur so weit nach innen, dass um eine durch den Rotor 10 definierte Drehachse A herum eine freie Durchtrittsöffnung 16 verbleibt, die einen Durchmesser DO von wenigstens 10 cm aufweist.

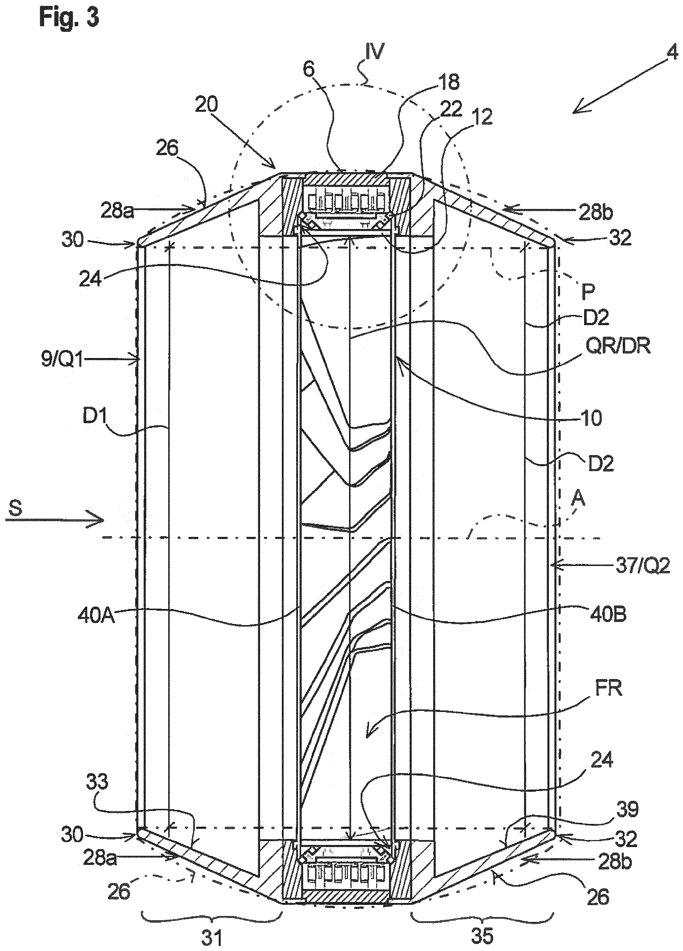

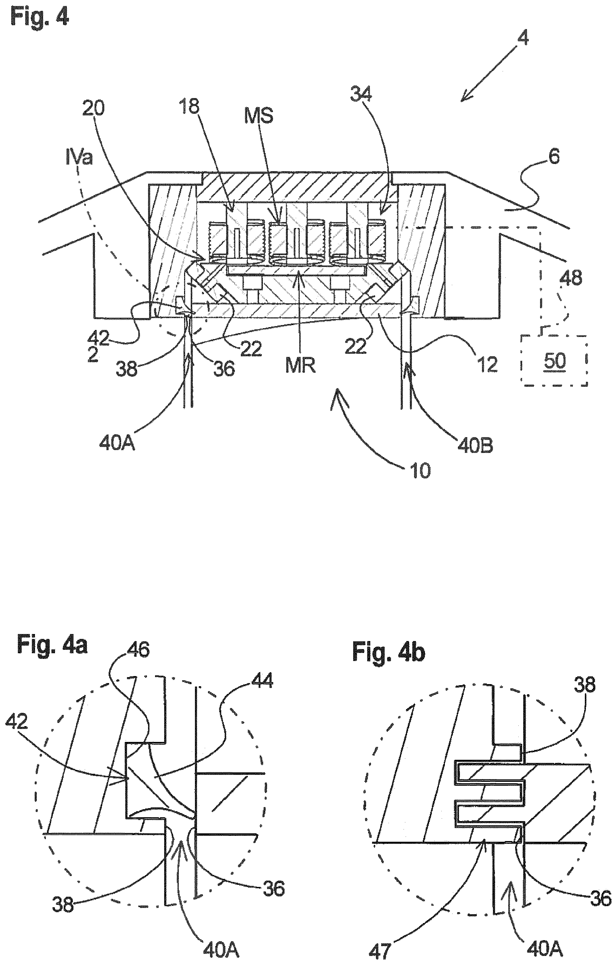

Wie die Fig. 3 und 4 zeigen, ist der Rotor 10 innerhalb eines ringförmigen Stators 18 drehbar gelagert, der mit dem Gehäuse 6 fest verbunden ist. Hierbei ist der Rotor 10 über mehrere Rollen 22 drehbar an einer statorseitigen Innenseite 24 gelagert, die durch den Stator 18 und/oder das Gehäuses 6 gebildet ist. Der Stator 18 und der Rotor 10 bilden auf diese Weise den Generator 20, der zur Erzeugung von elektrischem Strom aus einem die Turbine 4 in Strömungsrichtung S durchströmenden Medium dient.

Der Generator 20 der Turbine 4 arbeitet wegen einer über den Umfang des Stators verteilten hohen Polzahl als Langsamläufer. Hierbei sind Anzahl, Größe, Form und Anstellwinkel der Turbinenschaufeln 14 derart gewählt, dass bei den für das Wasserkraftwerk 2 vorgesehenen Anwendungen auch bei unterschiedlichen Fließgeschwindigkeiten keine nennenswerten Turbulenzen entstehen.

Wie aus Fig. 3 ferner zu entnehmen ist, weist das Gehäuse 6 der Turbine 4 einen umlaufenden Querschnitt auf, der an einer Außenseite 26 konvex geformt ist. Die konvexe Form kann dabei beispielsweise, wie dargestellt, durch zwei entgegengesetzt schräge Stirnflächen 28a, 28b ausgebildet sein, die sich von einer ersten stirnseitigen Schneide 30 und einer zweiten stirnseitigen Schneide 32 weg erstrecken.

Bezogen auf die Strömungsrichtung S ist die erste stirnseitige Schneide 30 an einem Eintrittsabschnitt 31 und die zweite stirnseitige Schneide 32 an einem Austrittsabschnitt 35 des Gehäuses 6 ausgeformt. Dabei begrenzt die erste stirnseitige Schneide 30 die Eintrittsöffnung 9 mit dem freien Eintrittsquerschnitt Q1 und eine eintrittsseitige Leitfläche 33 erstreckt sich weg von der ersten stirnseitigen Schneide 30 in Richtung des Rotors 10. Die Leitfläche 33 kann dabei, wie dargestellt, derart ausgebildet sein, dass sie sich zur ersten stirnseitigen Schneide 30 hin verjüngt. Alternativ hierzu kann die Leitfläche 33 beispielsweise auch zylinderförmig ausgebildet sein (nicht dargestellt).

Die zweite stirnseitige Schneide 32 des Austrittsabschnittes 35 begrenzt zudem eine Austrittsöffnung 37 mit einem freien Austrittsquerschnitt Q2, der einen Durchmesser D2 aufweist, wobei sich eine austrittsseitige Leitfläche 39 von der zweiten stirnseitigen Schneide 32 in Richtung des Rotors 10 weg erstreckt. Die austrittsseitige Leitfläche 39 kann dabei, wie dargestellt, ebenfalls derart ausgebildet sein, dass sie sich zur zweiten stirnseitigen Scheide 32 hin verjüngt. Alternativ hierzu kann aber auch die austrittsseitige Leitfläche 39 beispielsweise zylinderförmig ausgebildet sein (nicht dargestellt).

In jedem Fall ist der Durchmesser D1 des freien Eintrittsquerschnittes Q1 der Eintrittsöffnung 9 hierbei so bemessen, dass er maximal so groß ist, wie ein Durchmesser DR einer durch die Ringfläche RF des Rotorrings 12 begrenzten Querschnittsfläche QR. Vorzugsweise ist der freie Eintrittsquerschnitt Q1 derart bemessen, dass er der resultierenden Fläche aus der Querschnittsfläche QR des Rotorringes 12 abzüglich einer sich senkrecht zur Strömungsrichtung S erstreckenden Materialquerschnittsfläche der Turbinenschaufeln 14 entspricht. Auf diese Weise kann an der Eintrittsöffnung 9 im Betrieb nur ein solches Strömungsvolumen einströmen, wie es auch ohne wesentlichen Rückstau durch den Rotor 10 hindurchströmen kann.

Darüber hinaus ist der Durchmesser D1 des freien Eintrittsquerschnittes Q1 der Eintrittsöffnung 9 maximal so groß wie der Durchmesser D2 eines freien Austrittsquerschnittes Q2 der Austrittsöffnung 37. Auf diese Weise kann über einen gesamten Fließpfad P zwischen der Eintrittsöffnung 9 und der Austrittsöffnung 37 eine im Wesentlichen rückstaufreie Strömung eines durchgeleiteten Mediums ausgebildet werden, so dass im Betrieb des Wasserkraftwerkes 2 ein auftretender Staudruck auf ein Minimum reduziert werden kann.

Beide Schneiden 30, 32 sind dabei vorzugsweise scharfkantig oder mit einem möglichst kleinen Radius ausgebildet, um den entlang des Fließpfades P geleiteten Strömungskörper möglichst wirbelfrei vom übrigen Medium abtrennen und nach Durchströmen des Wasserkraftwerkes 2 diesem wieder zuführen zu können. Vorzugsweise ist der Radius der Schneiden 30, 32 derart gewählt, dass Schnittverletzungen bei der Montage und im üblichen Gebrauch des Wasserkraftwerkes 2 gerade noch ausgeschlossen werden können, wobei der Radium höchstens 5mm beträgt.

Alternativ zu dem dargestellten Querschnitt des Gehäuses 6 kann das Gehäuse an der Außenseite 26 auch umlaufend eben gewölbt sein, im Sinne von stetig ausgeformt. Der Querschnitt kann dabei, wie durch strichpunktierte Linien dargestellt, beispielsweise im Wesentlichen kreisbogenförmig und achsensymmetrisch geformt sein. Hierdurch könnte die Turbine 4 bei entsprechender Formgebung und Anordnung der Turbinenschaufeln 14 richtungsunabhängig, das heißt von beiden Seiten betrieben werden. Alternativ hierzu könnte die Außenseite 26 auch abschnittsweise an die Form eines Tragflächenprofils angepasst sein, um einen besonders niedrigen cW-Wert zu erzielen und dadurch den Strömungswiderstand in eine bestimmte Strömungsrichtung S beziehungsweise den im Betrieb am Gehäuse 6 auftretenden Staudruck zu minimieren.

Wie insbesondere aus Fig. 4 zu entnehmen ist, weist die Turbine 4 einen Spulenraum 34 auf, der durch den Rotorring 12 des Rotors 10 und den Stator 18 beziehungsweise das mit diesem fest verbundene Gehäuse 6 begrenzt ist. In diesem Spulenraum 34 sind rotorseitige magnetfelderzeugende Mittel MR und statorseitige magnetfelderzeugende Mittel MS benachbart zueinander angeordnet. In der dargestellten Ausführungsform des Generators 20 sind die rotorseitigen magnetfelderzeugenden Mittel MR dabei beispielhaft durch Dauermagnete und die statorseitigen magnetfelderzeugenden Mittel MS beispielhaft durch Spulen gebildet.

Wie aus Fig. 4 ferner zu entnehmen ist, sind die beiden Ringspalte 40A, 40B jeweils zwischen einem rotorseitigen ringförmigen Rand 36 und einem statorseitigen ringförmigen Rand 38, der sowohl durch den Stator 18 als auch durch das Gehäuse 6 gebildet sein kann, angeordnet. Beide Ringspalte 40A, 40B können dabei nach außen hin zumindest teilweise gegen den Eintritt von Wasser abgedichtet sein.

Zur Abdichtung der Ringspalte 40A, 40B kann hierbei, wie in Fig. 4 und 4a dargestellt, eine Lippendichtung 42 vorgesehen sein. Wie insbesondere aus Fig. 4a zu entnehmen ist, kann diese Lippendichtung 42 beispielsweise durch einen Dichtungsring 44 gebildet sein, der in einer statorseitigen Ringnut 46 gehalten ist und umlaufend am rotorseitigen Rand 36 anliegt. Alternativ hierzu kann der Dichtungsring 44 auch umgekehrt in einer rotorseitigen Ringnut 46 gehalten sein und am statorseitigen Rand 38 anliegen (nicht dargestellt).

Fig. 4b zeigt eine alternative Ausführungsform der Abdichtung des Spulenraumes 34, bei der am Ringspalt 40 eine Labyrinthdichtung 47 vorgesehen ist. Hierzu sind am rotorseitigen Rand 36 und am statorseitigen Rand 38 gegenseitige ineinander ragende Verzahnungen vorgesehen.

Alternativ oder zusätzlich zur Verwendung einer der oben genannten Dichtungen kann der Spulenraum 34 gemäß Fig. 4b über eine Druckleitung 48 mit Druckluft von einer Druckluftquelle 50 beaufschlagt sein, um einen Eintritt von Wasser in den Spulenraum 34 zu verhindern.

Zudem kann sowohl an der Lippendichtung 42 als auch an der Labyrinthdichtung oder an den Rändern 36, 38 selbst eine Antihaftbeschichtung vorgesehen sein, um trotz der Dichtung einen möglichst geringen Reibungswiderstand am Ringspalt 40 zu gewährleisten.

In einer weiteren Ausführungsform können die Rollen 22 durch schmierstofffreie Lagerrollen gebildet sein, wie beispielsweise aus Kunststoffrollen, mit denen auf eine Abdichtung der Ringspalte 40A, 40B verzichtet werden kann.

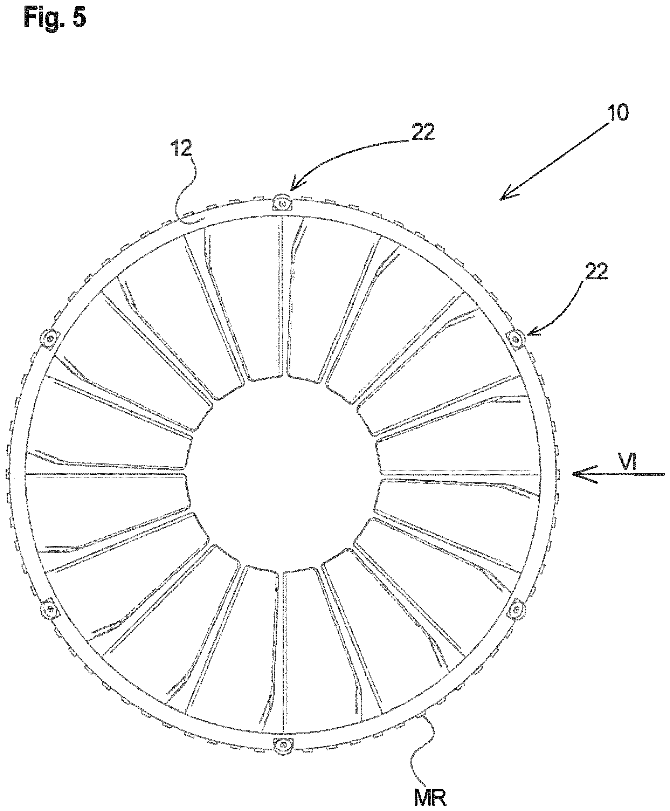

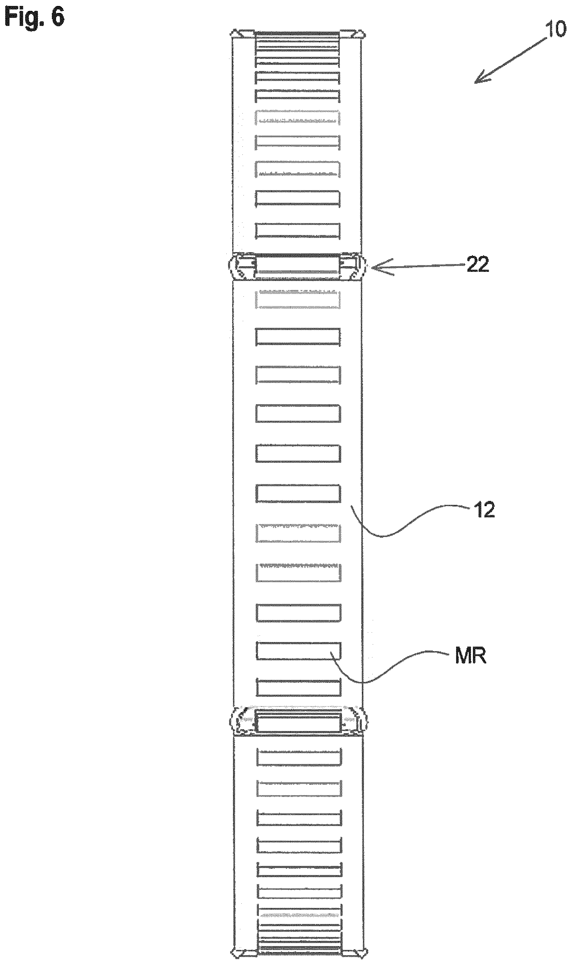

Um in jedem Falle eines Wassereintrittes in den Spulenraum 34 eine Beschädigung der magnetfelderzeugenden Mittel MR, MS zu vermeiden, können diese darüber hinaus zumindest im Bereich des Spulenraums 34 einen zusätzlichen Schutz aufweisen. Hierzu können die spulenförmigen statorseitigen magnetfelderzeugenden Mittel MS und die rotorseitigen magnetfelderzeugenden Mittel MR, die wie aus Fig. 5 und 6 zu entnehmen ist, durch umlaufend angeordnete Dauermagnete gebildet sind, beispielsweise mit Epoxid-Harz versiegelt sein.

Wie aus Fig. 5 und 6 ferner zu entnehmen ist, sind die Rollen 22 umlaufend am Rotorring 12 des Rotors 10 angeordnet. Zusätzlich oder alternativ hierzu wäre es auch möglich, die Rollen 22 am Stator 18 beziehungsweise am Gehäuse 6 anzubringen und am Rotor 10 abzustützen (nicht dargestellt).

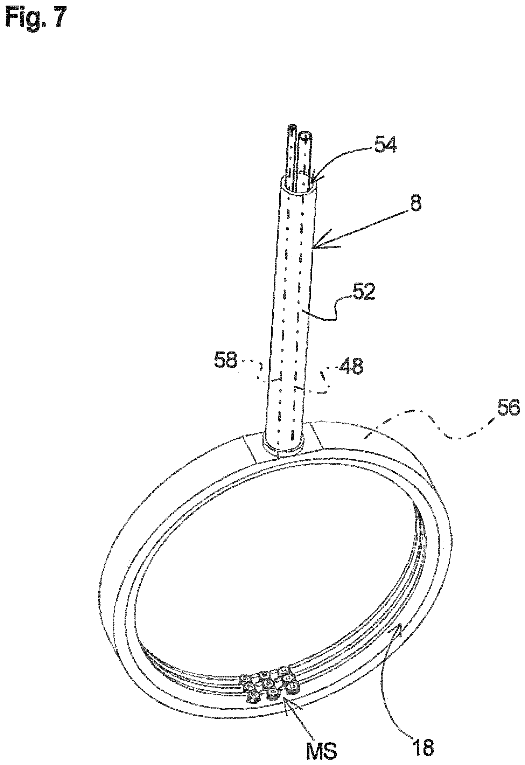

Fig. 7 zeigt den Stator 18 mit lediglich einem Teil der bevorzugterweise vollständig umlaufend angeordneten spulenförmigen statorseitigen magnetfelderzeugenden Mittel MS und einem Gehäuseteil 56, das fest mit dem Stator 18 verbunden oder einteilig mit diesem ausgebildet ist. An dem Gehäuseteil 56 ist zudem die Lagervorrichtung 8 angebracht, die im Wesentlichen durch ein rohrförmiges Lagerelement 52 gebildet ist und dadurch einen freien Aufnahmequerschnitt 54 bildet.

Dieser freie Aufnahmequerschnitt 54 wird dabei genutzt, um eine vom Stator abgehende elektrische Leitung 58 aufzunehmen, über die beispielsweise der durch die Turbine 4 gewonnene elektrische Strom weitergeleitet werden kann. Darüber hinaus kann über den Aufnahmequerschnitt 54 auch die Druckluftleitung 48 zum Spulenraum 34 geführt werden, um diesen mit der Druckluftquelle 50 zu verbinden.

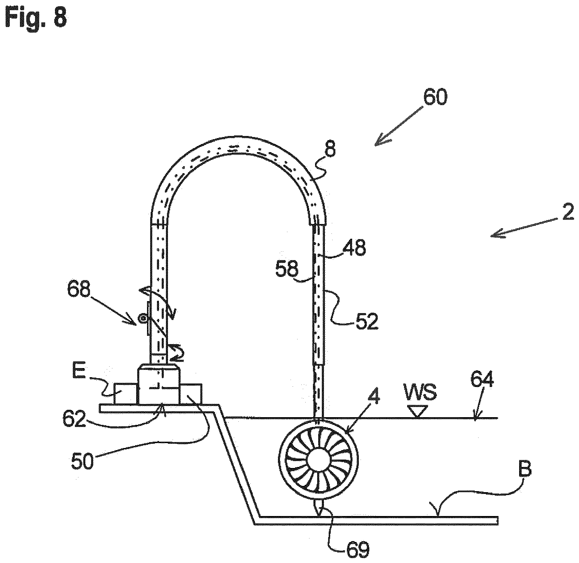

Fig. 8 zeigt eine Wasserkraftanlage 60, bei der das Wasserkraftwerk 2 über die Lagerungsvorrichtung 8 mit einer Fixierung 62 verbunden ist. Die Turbine 4 ist hierbei unterhalb eines Wasserspiegels WS eines fließenden Gewässers 64 angeordnet. Die Fixierung 62, die beispielsweise durch ein Auflager in Form eines Fundamentes oder durch eine Bodenverankerung gebildet sein kann, ist oberhalb der Turbine 4 auf einer Uferböschung 66 angeordnet. An der Fixierung 62 können dabei zudem weitere für den Betrieb des Wasserkraftwerkes 2 benötigten Mittel wie beispielsweise die Druckluftquelle 50 oder elektrische Einrichtungen E, wie beispielsweise ein Transformator oder ein elektrischer Verteiler vorgesehen sein.

Um hierbei die Turbine 4 beispielsweise zu Wartungs-, Reparatur- oder Reinigungszwecken aus dem fließenden Gewässer 64 heraus verlagern zu können, kann zwischen der Lagerungsvorrichtung 8 und der Fixierung 62 ein Dreh- und/oder Schwenkgelenk 68 vorgesehen sein.

Wie beispielhaft für die Ausführungsform nach Fig. 8 dargestellt, kann an dem Gehäuse 6 der Turbine 4 zudem ein Sporn 69 vorgesehen sein, der insbesondere von einer vom Lagerelement 52 abgewandten Seite des Gehäuses 6 absteht und zur zusätzlichen Verankerung des Wasserkraftwerkes 2 am Boden B des jeweiligen Gewässers genutzt werden kann.

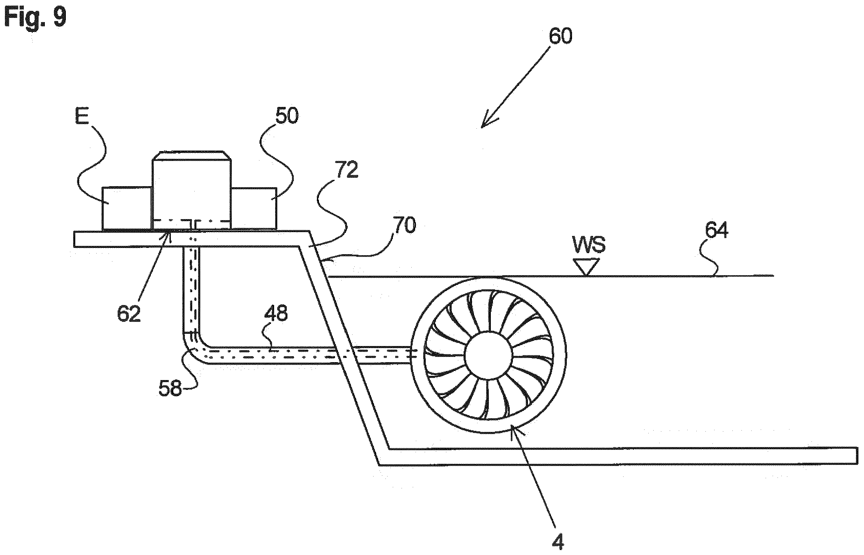

Fig. 9 zeigt eine alternative Ausführungsform der Wasserkraftanlage 60, die als stationäre Anlage betrieben wird. Hierzu ist die Lagerungsvorrichtung 8 dauerhaft an einem Gewässerrand 70 eingebaut, wie beispielsweise in eine Uferböschung.

In beiden Ausführungsformen gemäß Fig. 8 und 9 ist die Fixierung 62 dabei außerhalb des Gewässers in einer Position mit einem oberhalb der Turbine gelegenen erhöhten Niveau angeordnet, wie beispielsweise auf einem Deich 72. Auf diese Weise können sowohl die Fixierung 62 und die in der Lagerungsvorrichtung geführten Leitungen 48, 58 als auch die elektrischen Einrichtungen E gegen den eintritt von Wasser in Folge von Hochwasserereignissen geschützt werden.

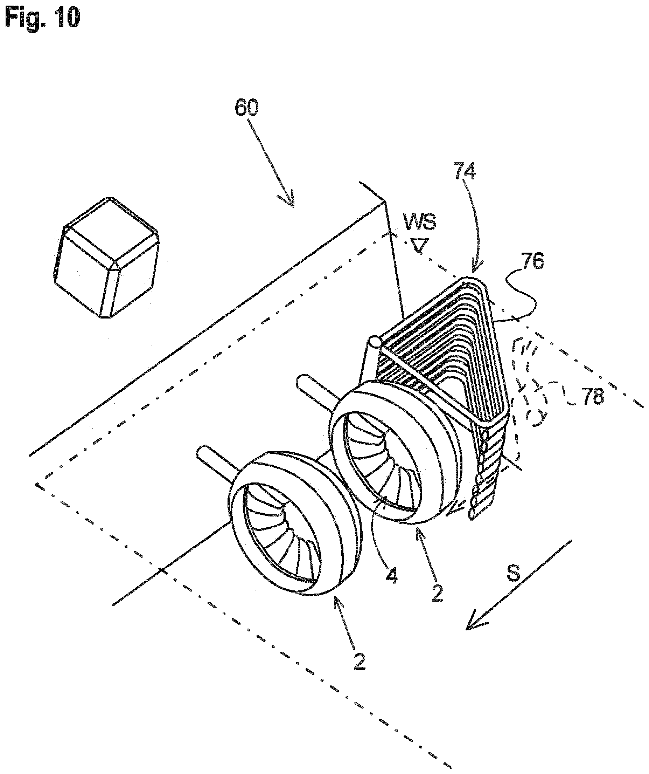

Wie aus Fig. 10 zu entnehmen ist, können in einer weiteren Ausführungsform des Wasserkraftanlage 60 auch zwei oder mehrere Wasserkraftwerke 2 vorgesehen sein, die beispielsweise, wie dargestellt, in Reihe oder alternativ auch parallel beziehungsweise zueinander versetzt angeordnet sein können.

Wie ferner anhand einer der Wasserkraftanlagen 60 gemäß Fig. 10 beispielhaft dargestellt, kann einem oder mehreren Wasserkraftwerken 2 ferner auch eine durchströmbare Schutzanordnung 74 vorgeschaltet sein. Diese besteht beispielsweise aus einer Anordnung von im Wesentlichen horizontal ausgerichteten Stäben 76, die gegenüber der Strömungsrichtung S des Fließgewässers 64 schräg angeordnet sind. Auf diese Weise kann auf das betreffende Wasserkraftwerk 2 zutreibendes Treib- oder Schwebegut 78 um die Turbine 4 herum abgelenkt werden, um Beschädigungen oder Verschmutzungen zu vermeiden.

Zur Aufnahme größerer Krafteinwirkungen, die beispielsweise durch auftreffendes Treib- oder Schwebegut 78 verursacht werden, kann die Schutzanordnung 74 dabei separat zu dem dahinter angeordneten Wasserkraftwerk 2 befestigt sein, wie beispielsweise am Gewässerbett oder am Ufer. Alternativ hierzu kann die Schutzanordnung 74 aber auch am Gehäuse 6 gehalten sein, um einen schnellen Aufbau und einfachen Transport der gesamten Wasserkraftanlage 60 zu ermöglichen.

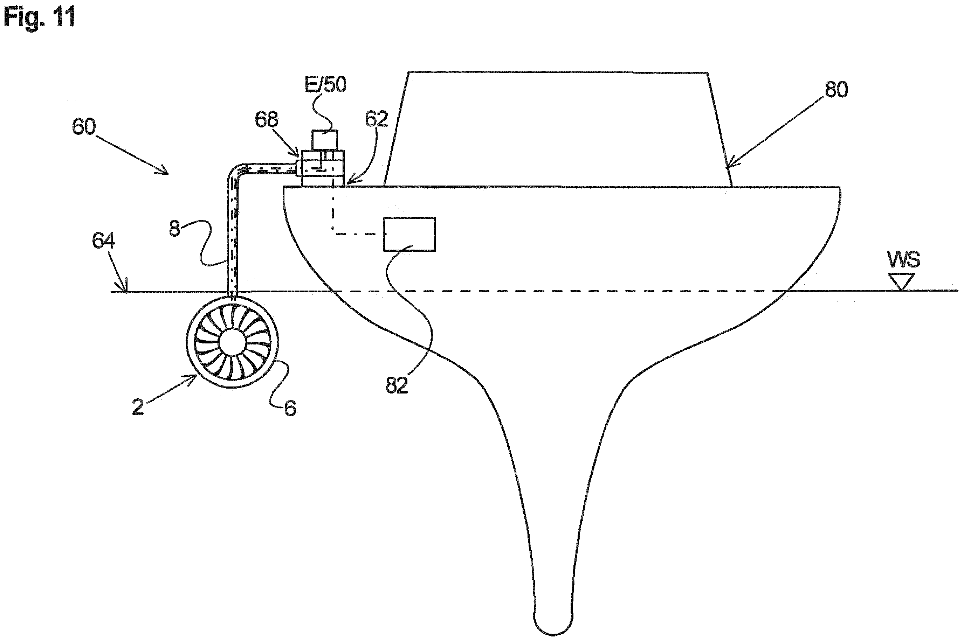

Wie aus Fig. 11 zu entnehmen ist, kann in einer weiteren Ausführungsform der Wasserkraftanlage 60 das Wasserkraftwerk 2 an einem Wasserfahrzeug 80 befestigt werden, wie beispielsweise über das Dreh- und/oder Schwenkgelenk 68. Alternativ zu der dargestellten seitlichen Befestigung kann die Wasserkraftanlage 60 dabei alternativ oder zusätzlich auch an einem Bug oder Heck des Wasserfahrzeugs 80 angebracht werden. In jedem Fall kann die Wasserkraftanlage 60 dabei zum Aufladen eines elektrochemischen Energiespeichers in Form eines Batterie-/Akkumulatoren-Systems 82 genutzt werden.

## Patentansprüche

1. Wasserkraftwerk (2) für die Erzeugung von elektrischem Strom aus einem fließenden Medium mittels einer Turbine (4),
die ein an einer Außenseite (26) umströmbares Gehäuse (6), einen Stator (18) eines elektrischen Generators (20), der vorzugsweise als Langsamläufer arbeitet, und einen relativ zum Stator (18) verdrehbar gelagerten Rotor (10) des Generators (20) aufweist,
und der Rotor (10) einen Rotorring (12) mit einer Ringfläche (FR) sowie eine Anordnung von sich ausgehend vom Rotorring (12) nach innen erstreckenden Turbinenschaufeln (14) aufweist und dabei eine freistehende Drehachse (A) definiert,
wobei das Gehäuse (6) einen Eintrittsabschnitt (31) mit einer eine kreisförmige Eintrittsöffnung (9) begrenzenden ersten stirnseitigen Schneide (30), von der sich eine eintrittsseitige Leitfläche (33) zum Rotor erstreckt, und einen Austrittsabschnitt (35) mit einer Austrittsöffnung (37) aufweist, zwischen denen ein den Rotorring (12) passierender Fließpfad (P) ausbildbar ist,
**dadurch gekennzeichnet, dass** die Eintrittsöffnung (9) einen freien Eintrittsquerschnitt (Q1) aufweist, der maximal so groß ist, wie eine durch den Rotorring (12) begrenzte Querschnittsfläche (QR) und das Gehäuse (6) zwischen der Eintrittsöffnung (9) und der Austrittsöffnung (37) an der Außenseite (26) eine konvexe Kontur aufweist.

2. Wasserkraftwerk nach Anspruch 1, **dadurch gekennzeichnet, dass** der freie Eintrittsquerschnitt (Q1) der Eintrittsöffnung (9) maximal so groß ist wie die durch den Rotorring (12) begrenzte Querschnittsfläche (QR) abzüglich einer Materialquerschnittsfläche der Turbinenschaufeln (14).

3. Wasserkraftwerk nach Anspruch 1 oder 2, **dadurch gekennzeichnet, dass** der Austrittsabschnitt (35) eine zweite stirnseitige Schneide (32) aufweist, die eine kreisförmige Austrittsöffnung (37) begrenzt, von der sich eine austrittsseitige Leitfläche (39) zum Rotor (10) erstreckt, und der freie Eintrittsquerschnitt (Q1) der Eintrittsöffnung (9) maximal so groß ist wie ein freier Austrittsquerschnitt (Q2) der Austrittsöffnung (37).

4. Wasserkraftwerk nach einem der Ansprüche 1 bis 3, **dadurch gekennzeichnet, dass** die wenigstens eine stirnseitige Schneide (30; 32) einen maximalen Radius von 5 mm aufweist.

5. Wasserkraftwerk nach einem der Ansprüche 1 bis 4, **dadurch gekennzeichnet, dass** der Rotor (10) gegenüber dem Stator (18) in beiden Drehrichtungen verdrehbar ist und wenigstens das Gehäuses (6) achsensymmetrisch ausgebildet ist.

6. Wasserkraftwerk nach einem der Ansprüche 1 bis 5, **dadurch gekennzeichnet, dass** die Innenflächen (F1, F2) und die Ringfläche (FR) einen inneren Strömungsdurchmesser (DS) von wenigstens 30 cm begrenzen.

7. Wasserkraftwerk nach einem der Ansprüche 1 bis 6, **dadurch gekennzeichnet, dass** an der Drehachse (A) eine freie Durchtrittsöffnung (16) vorgesehen ist, die einen Durchmesser (DO) von wenigstens 10 cm aufweist.

8. Wasserkraftwerk nach einem der Ansprüche 1 bis 7, **dadurch gekennzeichnet, dass** die Turbinenschaufeln (14) vom Rotorring (12) in den Eintrittsabschnitt (31) und in den Austrittsabschnitt (33) hinein ragen.

## Claims

1. Water power plant (2) for the generation of electric current from a flowing medium by means of a turbine (4),
which comprises a housing (6) around which the flow passes on an outer side (26), a stator (18) of an electric generator (20), which preferably operates as a slow runner, and a rotor (10) of the generator (20) which is rotatably mounted relative to the stator (18),
and the rotor (10) comprises a rotor ring (12) with an annular surface (FR) and, starting from the rotor ring (12), an arrangement of inwardly extending turbine blades (14), and thereby defining a free-standing axis of rotation (A),
wherein the housing (6) comprises an inlet portion (31) with a first front-side cutting edge (30), which delimits a circular inlet opening (9), from which extends an inlet-side guide surface (33) to the rotor, and an outlet portion (35) with an outlet opening (37), between which a flow path (P) passing the rotor ring (12) can be formed,
**characterized in that** the inlet opening (9) has a free inlet cross-section (Q1), which is maximally as large as a cross-sectional area (QR) delimited by the rotor ring (12), and the housing (6) exhibits a convex contour between the inlet opening (9) and the outlet opening (37) on the outer side (26).

2. Water power plant according to claim 1, **characterized in that** the free inlet cross-section (Q1) of the inlet opening (9) is maximally as large as the cross-sectional area (QR) delimited by the rotor ring (12), less a material cross-sectional area of the turbine blades (14).

3. Water power plant according to claim 1 or 2, **characterized in that** the outlet portion (35) comprises a second front-side cutting edge (32), which delimits a circular outlet opening (37), from which an outlet-side guide surface (39) extends to the rotor (10), and the free inlet cross-section (Q1) of the inlet opening (9) is maximally as large as a free outlet cross-section (Q2) of the outlet opening (37).

4. Water power plant according to any one of claims 1 to 3, **characterized in that** the at least one front-side cutting edge (30; 32) exhibits a maximum radius of 5 mm.

5. Water power plant according to any one of claims 1 to 4, **characterized in that** the rotor (10) can be rotated in both directions of rotation in relation to the stator (18), and at least the housing (6) is configured as axially symmetric.

6. Water power plant according to any one of claims 1 to 5, **characterized in that** the inner surfaces (F1, F2) and the annular surface (FR) delimit an inner flow diameter (DS) of at least 30 cm.

7. Water power plant according to any one of claims 1 to 6, **characterized in that** a free passage opening (16) is provided at the axis of rotation (A), which exhibits a diameter (DO) of at least 10 cm.

8. Water power plant according to any one of claims 1 to 7, **characterized in that** the turbine blades (14) project from the rotor ring (12) into the inlet portion (31) and into the outlet portion (35).

## Revendications

1. Centrale hydroélectrique (2) pour générer du courant électrique à partir d'un fluide en écoulement au moyen d'une turbine (4),
la turbine comportant un carter (6) pouvant recevoir un flux sur un côté extérieur (26), un stator (18) d'un générateur électrique (20) qui de préférence fonctionne à vitesse lente, et un rotor (10) de générateur (20) monté rotatif relativement au stator (18),
et le rotor (10) présente un anneau de rotor (12) comprenant une surface annulaire (FR) et un agencement d'aubes de turbine (14) s'étendant vers l'intérieur à partir de l'anneau de rotor (12) et définit ainsi un axe de rotation (A) à cavité centrale,
le carter (6) présentant une partie d'entrée (31) comprenant une première arête (30) côté frontal délimitant une ouverture d'entrée circulaire (9), et depuis laquelle une surface déflectrice (33) côté entrée s'étend vers le rotor, et une partie de sortie (35) comprenant une ouverture de sortie (37), entre lesquelles un trajet d'écoulement (P) passant dans l'anneau de rotor (12) peut être réalisé,
**caractérisée en ce que** l'ouverture d'entrée (9) présente une section transversale d'entrée libre (Q1), qui au maximum est aussi grande qu'une surface transversale (QR) délimitée par l'anneau de rotor (12) et le carter (6) présente un contour convexe sur le côté extérieur (26) entre l'ouverture d'entrée (9) et l'ouverture de sortie (37).

2. Centrale hydroélectrique selon la revendication 1, **caractérisée en ce que** la section transversale d'entrée libre (Q1) de l'ouverture d'entrée (9), au maximum, est aussi grande que la surface transversale (QR) délimitée par l'anneau de rotor (12) diminuée d'une surface de section transversale de matière des aubes de turbine (14).

3. Centrale hydroélectrique selon la revendication 1 ou 2, **caractérisée en ce que** la partie de sortie (35) présente une deuxième arête (32) côté frontal, qui délimite une ouverture de sortie circulaire (37), et depuis laquelle une surface déflectrice (39) côté arrière s'étend vers le rotor (10), et la section transversale d'entrée libre (Q1) de l'ouverture d'entrée (9), au maximum, est aussi grande qu'une section transversale de sortie libre (Q2) de l'ouverture de sortie (37).

4. Centrale hydroélectrique selon l'une des revendications 1 à 3, **caractérisée en ce que** l'au moins une arête côté frontal (30 ; 32) présente un rayon maximal de 5 mm.

5. Centrale hydroélectrique selon l'une des revendications 1 à 4, **caractérisée en ce que** le rotor (10) est rotatif par rapport au stator (18) dans les deux sens de rotation et au moins le carter (6) est formé axisymétrique.

6. Centrale hydroélectrique selon l'une des revendications 1 à 5, **caractérisée en ce que** les surfaces intérieures (F1, F2) et la surface annulaire (FR) délimitent un diamètre d'écoulement intérieur (DS) d'au moins 30 cm.

7. Centrale hydroélectrique selon l'une des revendications 1 à 6, **caractérisée en ce qu'il** est prévu une ouverture de passage libre (16), près de l'axe de rotation (A), ayant un diamètre (DO) d'au moins 10 cm.

8. Centrale hydroélectrique selon l'une des revendications 1 à 7, **caractérisée en ce que** les aubes de turbines (14) de l'anneau de rotor (12) font saillie dans la partie d'entrée (31) et dans la partie de sortie (35).
